# EUROPEAN PATENT APPLICATION

(11) **EP 4 819 274 A1**
(43) Date of publication of application: **07.10.2026**
(21) Application number: 24895497.6
(22) Date of filing: 29.05.2024
(51) Int. Cl.: H01M 10/0525, H01M 4/36

(54) **SECONDARY BATTERY AND ELECTRIC DEVICE**

(30) Priority: 30.11.2023 CN 202311641330
(71) Applicant: Contemporary Amperex Technology Co., Limited, Ningde, Fujian 352100 (CN)
(72) Inventor: WU, Kai, Ningde, Fujian 352100 (CN); LI, Yuanyuan, Ningde, Fujian 352100 (CN); LI, Lianchuan, Ningde, Fujian 352100 (CN); SHEN, Rui, Ningde, Fujian 352100 (CN); HE, Libing, Ningde, Fujian 352100 (CN)
(74) Representative: Gong, Jinping
(86) International application number: PCT/CN2024/096043
(87) International publication number: WO 2025/112387

(57) **Abstract**

Provided are a secondary battery and an electric device. The secondary battery includes a negative electrode plate, and the negative electrode plate includes a negative electrode current collector and a negative electrode film layer located on at least one surface of the negative electrode current collector and including a negative electrode active material. The negative electrode active material includes a first carbon-based material and a second carbon-based material. The first carbon-based material includes an external region and an internal region located at an inner side of the external region, where the external region refers to a region formed by extending from a surface of a particle of the first carbon-based material to an interior of the particle by a distance of 2.5 µm; and in a cross-sectional view of the first carbon-based material, a total pore area of the external region is denoted as S₁, a total pore area of the internal region is denoted as S₂, and S₂ > S₁, and a degree of graphitization of the first carbon-based material is greater than a degree of graphitization of the second carbon-based material.

## Description

### CROSS-REFERENCE TO RELATED APPLICATION

The present disclosure is presented based on Chinese Patent Application No. 202311641330.4, filed on November 30, 2023 and entitled "SECONDARY BATTERY AND ELECTRIC DEVICE", and claims priority to the Chinese Patent Application, the content of which is incorporated herein by reference in its entirety.

### TECHNICAL FIELD

The present disclosure relates to the technical field of batteries, and in particular, to a secondary battery and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, and aerospace. Currently, as the application range of secondary batteries becomes increasingly widespread, higher requirements are imposed on the performance of secondary batteries.

Therefore, how to enable secondary batteries to achieve excellent cycle performance and kinetic performance while having high energy density has become an urgent problem to be solved in the art.

### SUMMARY

The present disclosure is made in view of the above problem, and an objective thereof is to provide a secondary battery and an electric device. The secondary battery achieves both excellent cycle performance and kinetic performance while having high energy density.

A first aspect of the present disclosure provides a secondary battery. The secondary battery includes a negative electrode plate, and the negative electrode plate includes a negative electrode current collector and a negative electrode film layer located on at least one surface of the negative electrode current collector and including a negative electrode active material. The negative electrode active material includes a first carbon-based material and a second carbon-based material. The first carbon-based material includes an external region and an internal region located at an inner side of the external region, where the external region refers to a region formed by extending from a surface of a particle of the first carbon-based material to an interior of the particle by a distance of 2.5 µm; and in a cross-sectional view of the first carbon-based material, a total pore area of the external region is denoted as S₁, a total pore area of the internal region is denoted as S₂, and S₂ > S₁, and a degree of graphitization of the first carbon-based material is greater than a degree of graphitization of the second carbon-based material.

Since the negative electrode active material in the negative electrode film layer includes both the first carbon-based material and the second carbon-based material, and in the first carbon-based material, S₂ > S₁, it indicates that the structure of the external region of the carbon-based material is denser than the structure of the internal region of the carbon-based material. Furthermore, the degree of graphitization of the first carbon-based material is greater than the degree of graphitization of the second carbon-based material, such that the negative electrode plate can achieve high compaction density, low volume change performance, and high active ion transport speed. Therefore, the secondary battery using this negative electrode plate can achieve excellent cycle performance and kinetic performance while having high energy density.

In some embodiments, the degree of graphitization of the first carbon-based material is greater than or equal to 95.5%, optionally 95.5% to 98.0%; the degree of graphitization of the second carbon-based material is 85% to 90.5%, optionally 85.5% to 90%. By setting the degree of graphitization of the first carbon-based material within the above range, it is beneficial for the negative electrode active material to achieve a high compaction density. By setting the degree of graphitization of the second carbon-based material within the above range, it is beneficial to improving the active ion transport performance of the negative electrode film layer, thereby enabling the secondary battery to achieve both high energy density and good kinetic performance.

In some embodiments, a specific capacity of the second carbon-based material is less than a specific capacity of the first carbon-based material. By using the first carbon-based material having a high capacity in combination with the second carbon-based material having a low degree of graphitization, it is beneficial for the secondary battery to achieve both high energy density and good kinetic performance.

In some embodiments, an interlayer spacing of a 002 crystal plane of the second carbon-based material is greater than an interlayer spacing of a 002 crystal plane of the first carbon-based material. The greater interlayer spacing of the second carbon-based material facilitates rapid deintercalation of active ions, while the smaller interlayer spacing of the first carbon-based material contributes to a higher specific capacity. Therefore, by adjusting the interlayer spacing of the 002 crystal plane of the second carbon-based material to be greater than the interlayer spacing of the 002 crystal plane of the first carbon-based material, it is beneficial for the secondary battery to achieve both high energy density and good kinetic performance.

In some embodiments, I_{D}/I_{G} of the second carbon-based material is greater than I_{D}/I_{G} of the first carbon-based material, I_{D} denotes a D peak intensity at 1350 ± 50 cm⁻¹ in a Raman spectrum of the carbon-based material, and I_{G} denotes a G peak intensity at 1580 ± 50 cm⁻¹ in the Raman spectrum of the carbon-based material; optionally, the I_{D}/I_{G} of the first carbon-based material is denoted as A, the I_{D}/I_{G} of the second carbon-based material is denoted as B, and A/B ranges from 0.45 to 0.85. By adjusting the I_{D}/I_{G} of the second carbon-based material to be greater than the I_{D}/I_{G} of the first carbon-based material, in one aspect, it is beneficial to improving the overall surface stability of the negative electrode active material, reducing the occurrence of side reactions, and improving the cycle performance; in another aspect, it is also beneficial for the secondary battery to achieve good kinetic performance.

In some embodiments, the first carbon-based material and/or the second carbon-based material includes primary particles. Optionally, a number proportion of the primary particles in the first carbon-based material is greater than or equal to 80%, and a number proportion of the primary particles in the second carbon-based material is greater than or equal to 80%. By configuring the first carbon-based material and/or the second carbon-based material to contain an appropriate proportion of primary particles, the first carbon-based material and/or the second carbon-based material can achieve high structural stability, and the occurrence of side reactions can be reduced, thereby improving the cycle performance of the secondary battery. In addition, the compaction density of the negative electrode film layer can also be improved, thereby increasing the energy density of the secondary battery.

In some embodiments, 1.8 ≤ S₂/S₁ ≤ 199.8, or 2.3 ≤ S₂/S₁ ≤ 148.7. Therefore, the secondary battery can better achieve both kinetic performance and cycle performance.

In some embodiments, an area of a pore structure in the external region of the first carbon-based material is less than or equal to 0.15 µm², optionally less than or equal to 0.13 µm². By controlling the area of the pore structure in the external region of the first carbon-based material to fall within the above range, the external region of the first carbon-based material can achieve a dense structure, thereby effectively improving the structural stability of the first carbon-based material, preventing the electrolytic solution from infiltrating into the pore structure inside the particles of the first carbon-based material as much as possible, and further effectively improving the cycle performance of the secondary battery.

In some embodiments, the internal region of the first carbon-based material includes one or more pore structures having an area greater than or equal to 0.15 µm², and optionally includes one or more pore structures having an area of 0.15 µm² to 2.0 µm². By configuring the internal region of the first carbon-based material to include the pore structure of the above size, in one aspect, sufficient and stable expansion space can be reserved for the volume change of the particles of the first carbon-based material, the risk of particle fracture of the first carbon-based material is reduced, and the occurrence of side reactions is reduced; in another aspect, the compaction density of the negative electrode film layer can be improved, and the volume change of the negative electrode film layer can be buffered.

In some embodiments, at least part of a surface of the first carbon-based material is provided with a coating layer. Optionally, the coating layer includes a carbon coating layer. Therefore, it is beneficial to improving the kinetic performance of the secondary battery.

In some embodiments, the specific capacity of the first carbon-based material is greater than or equal to 355 mAh/g, optionally 355 mAh/g to 370 mAh/g. When the specific capacity of the first carbon-based material falls within the above range, it is beneficial to increasing the energy density of the secondary battery.

In some embodiments, a true density of the first carbon-based material is 2.22 g/cm³ to 2.27 g/cm³, optionally 2.23 g/cm³ to 2.26 g/cm³. When the true density of the first carbon-based material falls within the above range, it is beneficial to improving the compaction density of the negative electrode film layer, thereby increasing the energy density of the secondary battery.

In some embodiments, a powder compaction density of the first carbon-based material under a pressure of 20000 N is 1.65 g/cm³ to 2.0 g/cm³, optionally 1.68 g/cm³ to 1.98 g/cm³. By setting the powder compaction density of the first carbon-based material within the above range, the compaction density of the negative electrode film layer can be improved, thereby increasing the energy density of the secondary battery.

In some embodiments, a volume distribution particle size Dv50 of the first carbon-based material is 8.0 µm to 25.0 µm, optionally 10.0 µm to 22.0 µm. In some embodiments, a volume distribution particle size Dv90 of the first carbon-based material is 16.0 µm to 45.0 µm, optionally 16.5 µm to 42.0 µm.

By setting the volume distribution particle size Dv50 and/or Dv90 of the first carbon-based material within the above range, it is beneficial to improving the transport performance of active ions and electrons, thereby further improving the kinetic performance of the secondary battery. In addition, the occurrence of side reactions can be reduced, and the cycle performance of the secondary battery can be improved.

In some embodiments, a particle size distribution (Dv90-Dv10)/Dv50 of the first carbon-based material is less than or equal to 1.55, optionally 0.90 to 1.50. By setting the particle size distribution (Dv90-Dv10)/Dv50 of the first carbon-based material within the above range, the particle packing efficiency of the first carbon-based material is good, which is beneficial to improving the compaction density of the negative electrode film layer, thereby further increasing the energy density of the secondary battery. In addition, it is also beneficial to adjusting the pore distribution of the negative electrode film layer, improving the transport performance of active ions and electrons, and enhancing the wettability and retention characteristics of the negative electrode film layer with respect to the electrolytic solution, thereby improving the kinetic performance and cycle performance of the secondary battery.

In some embodiments, a tap density of the first carbon-based material is 0.85 g/cm³ to 1.30 g/cm³, optionally 0.90 g/cm³ to 1.25 g/cm³. By setting the tap density of the first carbon-based material within the above range, the carbon material exhibits relatively good processability, and the compaction density of the negative electrode film layer can be improved, thereby increasing the energy density of the secondary battery.

In some embodiments, the I_{D}/I_{G} of the first carbon-based material is less than or equal to 0.280, optionally 0.155 to 0.220. Therefore, the consumption of active lithium can be effectively reduced, and the cycle performance can be further improved while maintaining kinetic performance.

In some embodiments, an adsorption amount of linseed oil by 100 g of the first carbon-based material is 30 mL to 47 mL. When the adsorption amount of linseed oil by the carbon material falls within the above range, the first carbon-based material exhibits relatively good processability, and the surface side reaction activity of the particles is relatively low. Therefore, the consumption of active ions due to the formation of SEI film can be reduced.

In some embodiments, the specific capacity of the second carbon-based material is 280 mAh/g to 340 mAh/g, optionally 300 mAh/g to 338 mAh/g. By adjusting the specific capacity of the second carbon-based material within the above range, the kinetic performance of the secondary battery can be improved.

In some embodiments, the interlayer spacing of the 002 crystal plane of the second carbon-based material is 0.33622 nm to 0.33669 nm, optionally 0.33626 nm to 0.33665 nm. By adjusting the interlayer spacing of the second carbon-based material within the above range, rapid deintercalation of active ions is facilitated, such that it is beneficial to improving the active ion transport performance of the negative electrode film layer, thereby enabling the secondary battery to achieve good kinetic performance.

In some embodiments, a volume distribution particle size Dv50 of the second carbon-based material is 10 µm to 18 µm, optionally 12 µm to 17 µm. By setting the volume distribution particle size Dv50 of the second carbon-based material within the above range, the specific surface area of the second carbon-based material can be reduced, the occurrence of side reactions can be reduced, and the cycle performance of the secondary battery can be improved.

In some embodiments, a tap density of the second carbon-based material is 0.95 g/cm³ to 1.35 g/cm³, optionally 1.00 g/cm³ to 1.30 g/cm³. By setting the tap density of the second carbon-based material within the above range, the second carbon-based material exhibits relatively good processability.

In some embodiments, a volume distribution particle size Dv90 of the second carbon-based material is 25.0 µm to 45.0 µm, optionally 26.5 µm to 42.0 µm. The second carbon-based material exhibits relatively good processability, and it is beneficial for the negative electrode film layer to achieve an appropriate pore distribution, thereby improving the kinetic performance of the secondary battery.

In some embodiments, a particle size distribution (Dv90-Dv10)/Dv50 of the second carbon-based material is less than or equal to 1.90, optionally 0.90 to 1.85. It is beneficial to improving the compaction density of the negative electrode film layer and increasing the energy density of the secondary battery. In addition, it is also beneficial to forming a proper pore channel structure between the particles of the negative electrode film layer, and improving the transport performance of active ions and electrons in the negative electrode film layer, thereby improving the kinetic performance of the secondary battery.

In some embodiments, an adsorption amount of linseed oil by 100 g of the second carbon-based material is 38 mL to 50 mL. When the adsorption amount of linseed oil by the carbon material falls within the above range, the second carbon-based material particles exhibit relatively good processability, and the surface side reaction activity is relatively low. Therefore, the consumption of active ions due to the formation of SEI film can be reduced.

In some embodiments, the second carbon-based material is artificial graphite. The artificial graphite has a stable structure, thereby improving the cycle performance of the secondary battery.

In some embodiments, the I_{D}/I_{G} of the second carbon-based material is 0.20 to 0.40, optionally 0.25 to 0.35. Therefore, the kinetic performance can be further improved.

In some embodiments, a content of the first carbon-based material in the negative electrode active material is greater than or equal to 30 wt%, optionally 50 wt% to 80 wt%. By setting the content of the first carbon-based material within the above range, the secondary battery can achieve good kinetic performance and cycle performance while having high energy density.

In some embodiments, the negative electrode active material further includes a silicon-based material.

Optionally, in the negative electrode active material, a content of the silicon-based material is 0.5 wt% to 30 wt%. The higher lithium intercalation potential of the silicon-based material facilitates improving the kinetic performance of the secondary battery, and can also improve the capacity of the negative electrode, thereby further increasing the energy density of the secondary battery.

In some embodiments, a compaction density of the negative electrode film layer is 1.45 g/cm³ to 1.90 g/cm³, optionally 1.50 g/cm³ to 1.85 g/cm³. Therefore, this is beneficial to enabling the negative electrode film layer to achieve both a high capacity and high active ion and electron transport performance, thereby facilitating the secondary battery to achieve both high energy density and good cycle performance and kinetic performance.

In some embodiments, an areal density of the negative electrode film layer is 5.0 mg/cm² to 25.0 mg/cm², optionally 5.5 mg/cm² to 22.5 mg/cm². Therefore, this is beneficial to enabling the negative electrode film layer to achieve both a high capacity and high active ion and electron transport performance, thereby facilitating the secondary battery to achieve both high energy density and good cycle performance and kinetic performance.

In some embodiments, a thickness of the negative electrode film layer is 40 µm to 120 µm, optionally 45 µm to 100 µm.

A second aspect of the present disclosure provides an electric device. The electric device includes the secondary battery according to the first aspect of the present disclosure.

### Advantageous Effects of Invention

The secondary battery of the present disclosure has high energy density, and achieves both excellent cycle performance and kinetic performance.

### BRIEF DESCRIPTION OF THE DRAWINGS

In order to more clearly illustrate the technical solutions of the embodiments of the present disclosure, the drawings required to be used in the embodiments of the present disclosure are briefly described below. Apparently, the drawings in the following description illustrate merely some embodiments of the present disclosure, and those of ordinary skill in the art may still derive other drawings from these drawings without creative efforts.
FIG. 1 is a schematic diagram of a cross-sectional image of a particle of a first carbon-based material according to the present disclosure.
FIG. 2 is a schematic diagram of an embodiment of a secondary battery according to the present disclosure.
FIG. 3 is a schematic exploded view of an embodiment of a secondary battery according to the present disclosure.
FIG. 4 is a schematic diagram of an embodiment of a battery module according to the present disclosure.
FIG. 5 is a schematic diagram of an embodiment of a battery pack according to the present disclosure.
FIG. 6 is a schematic exploded view of the embodiment of the battery pack shown in FIG. 5.
FIG. 7 is a schematic diagram of an embodiment of an electric device including the secondary battery according to the present disclosure as a power source.

The drawings are not necessarily drawn to scale. Reference numerals are as follows: 1: battery pack, 2: upper case body, 3: lower case body, 4: battery module, 5: secondary battery, 51: housing, 52: electrode assembly, 53: cover plate, 100: first carbon-based material, 101: external region, 102: internal region.

### DETAILED DESCRIPTION

Hereinafter, embodiments of the secondary battery and the electric device of the present disclosure are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present disclosure and are not intended to limit the subject matter recited in the claims.

The "ranges" disclosed in the present disclosure are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present disclosure, unless otherwise specified, the numerical range "a to b" indicates an abbreviated representation of any combination of real numbers between a and b, where both a and b are real numbers. For example, the numerical range "0 to 5" indicates that all real numbers between "0 to 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present disclosure may be combined with one another to form new technical solutions.

Unless otherwise specified, all technical features and optional technical features of the present disclosure may be combined with one another to form new technical solutions.

Unless otherwise specified, all steps of the present disclosure can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Currently, carbon-based materials are widely used as negative electrode active materials in secondary batteries. In order to improve the performance of the negative electrode active material, surface coating and other treatments are usually performed on the carbon-based material particles. However, the above means leads to a decrease in both the specific capacity and the compaction density, which affects the energy density of the secondary battery. The coating layer on the surface is generally made of a soft or hard carbon material, which exhibits high activity and causes more side reactions, thereby affecting the cycle performance of the secondary battery.

Therefore, it is difficult for current secondary batteries to achieve both high energy density and good kinetic performance and cycle performance.

In view of this, a first aspect of the embodiments of the present disclosure provides a secondary battery.

The type of the secondary battery is not particularly limited in the present disclosure. For example, the secondary battery may be a lithium-ion battery, or the like. Typically, a secondary battery includes a positive electrode plate, a negative electrode plate, and an electrolyte. During the charging and discharging process of the secondary battery, active ions are intercalated and deintercalated back and forth between the positive electrode plate and the negative electrode plate, and the electrolyte plays a role in conducting the active ions between the positive electrode plate and the negative electrode plate. The type of the electrolyte is not particularly limited in the present disclosure, and a choice can be made as needed in practice. For example, the electrolyte may be selected from at least one of a solid-state electrolyte and a liquid-state electrolyte (i.e., an electrolytic solution). Secondary batteries using an electrolytic solution and some secondary batteries using a solid-state electrolyte may further include a separator. The separator is disposed between the positive electrode plate and the negative electrode plate to perform a function of isolation.

### [Negative Electrode Plate]

In the secondary battery of the present disclosure, the negative electrode plate includes a negative electrode current collector and a negative electrode film layer located on at least one surface of the negative electrode current collector and including a negative electrode active material. The negative electrode active material includes a first carbon-based material and a second carbon-based material. The first carbon-based material includes an external region and an internal region located at an inner side of the external region, where the external region refers to a region formed by extending from a surface of a particle of the first carbon-based material to an interior of the particle by a distance of 2.5 µm; and in a cross-sectional view of the first carbon-based material, a total pore area of the external region is denoted as S₁, a total pore area of the internal region is denoted as S₂, and S₂ > S₁, and a degree of graphitization of the first carbon-based material is greater than a degree of graphitization of the second carbon-based material.

In the present disclosure, the "internal region" refers to a region in the particles of a material, other than the external region.

By configuring the first carbon-based material to satisfy S₂ > S₁, the first carbon-based material has the following characteristics: the internal region has a greater number of pores and/or larger pore sizes, while the external region has a smaller number of pores and/or smaller pore sizes, indicating that the structure of the external region of the carbon-based material is denser than that of the internal region. The pore structure of the internal region of the first carbon-based material can reserve the necessary expansion space for the volume change of the particles, thereby reducing the risk of new interface formation caused by particle fracture, reducing the thickness rebound rate of the negative electrode film layer, and further reducing the occurrence of side reactions. The external region of the first carbon-based material has a smaller number of pores and/or smaller pore sizes, such that the particles of the first carbon-based material can have a stable structure and the infiltration of electrolytic solution into the pore structure inside the particles of the first carbon-based material can be prevented as much as possible, thereby further reducing the occurrence of side reactions and reducing the consumption of active ions due to the formation of SEI film inside the particles. Therefore, by including the above first carbon-based material, the cycle performance of the secondary battery can be improved.

In the present disclosure, the second carbon-based material has a lower degree of graphitization than the degree of graphitization of the first carbon-based material, and has a larger interlayer spacing, which facilitates rapid deintercalation of active ions and provides good kinetic performance. However, the second carbon-based material has a lower specific capacity and compaction density, which adversely affects the energy density of the negative electrode film layer and even the secondary battery. Conversely, the first carbon-based material has a higher specific capacity and a pore structure, and has a higher compaction density. Therefore, the energy density of the negative electrode film layer and even the secondary battery can be improved.

In the present disclosure, by configuring the negative electrode active material in the negative electrode film layer to include both the first carbon-based material and the second carbon-based material described above, the characteristics of high capacity and high compaction density of the first carbon-based material and the excellent kinetic performance of the second carbon-based material can be fully exerted, enabling the secondary battery to achieve both high energy density and excellent kinetic performance. In addition, as described above, the internal pore structure of the first carbon-based material can buffer the lithium intercalation expansion of the particles, while the second carbon-based material has a lower degree of graphitization and a larger interlayer spacing, and exhibits a small particle volume change and low expansion when lithium ions are intercalated. That is, both the first carbon-based material and the second carbon-based material can reduce expansion, thereby effectively preventing SEI damage caused by expansion, significantly reducing active lithium consumption, and greatly improving the cycle performance of the battery.

In some embodiments, the degree of graphitization of the above first carbon-based material is greater than or equal to 95.5%, optionally 95.5% to 98.0%. By adjusting the degree of graphitization of the first carbon-based material within the above range, it is beneficial for the negative electrode active material to achieve a high compaction density and specific capacity. The degree of graphitization of the above second carbon-based material is 85% to 90.5%, optionally 85.5% to 90%. By setting the degree of graphitization of the second carbon-based material within the above range, the interlayer spacing of the second carbon-based material is relatively large, and thus the active ion transport performance of the negative electrode film layer can be improved. Therefore, by including both the first carbon-based material and the second carbon-based material described above, the secondary battery can achieve both high energy density and good kinetic performance. In some embodiments, the specific capacity of the above second carbon-based material is less than the specific capacity of the above first carbon-based material. Optionally, the specific capacity of the above first carbon-based material is greater than or equal to 355 mAh/g, optionally 355 mAh/g to 370 mAh/g. When the specific capacity of the first carbon-based material falls within the above range, it is beneficial to increasing the energy density of the secondary battery. Optionally, the specific capacity of the above second carbon-based material is 280 mAh/g to 340 mAh/g, optionally 300 mAh/g to 338 mAh/g. Therefore, by using the first carbon-based material having a high capacity in combination with the second carbon-based material having a low degree of graphitization, it is beneficial for the secondary battery to achieve both high energy density and good kinetic performance.

In some embodiments, the interlayer spacing of the 002 crystal plane of the above second carbon-based material is greater than the interlayer spacing of the 002 crystal plane of the above first carbon-based material. The greater interlayer spacing of the second carbon-based material facilitates rapid deintercalation of active ions, while the smaller interlayer spacing of the first carbon-based material contributes to a higher specific capacity. Therefore, by adjusting the interlayer spacing of the 002 crystal plane of the second carbon-based material to be greater than the interlayer spacing of the 002 crystal plane of the first carbon-based material, the secondary battery is further improved to achieve both high energy density and good kinetic performance.

In some embodiments, I_{D}/I_{G} of the above second carbon-based material is greater than I_{D}/I_{G} of the above first carbon-based material, where I_{D} denotes a D peak intensity at 1350 ± 50 cm⁻¹ in a Raman spectrum of the carbon-based material, and I_{G} denotes a G peak intensity at 1580 ± 50 cm⁻¹ in the Raman spectrum of the carbon-based material. Optionally, the I_{D}/I_{G} of the above first carbon-based material is denoted as A, the I_{D}/I_{G} of the above second carbon-based material is denoted as B, and A/B ranges from 0.45 to 0.85. For example, A/B may be 0.46, 0.50, 0.55, 0.60, 0.65, 0.70, 0.75, 0.8, or 0.85. By adjusting the I_{D}/I_{G} of the second carbon-based material to be greater than the I_{D}/I_{G} of the first carbon-based material, in one aspect, it is beneficial to improving the overall surface stability of the negative electrode active material, reducing the occurrence of side reactions, and improving the cycle performance; in another aspect, it is also beneficial for the secondary battery to achieve good kinetic performance.

In some embodiments, the above first carbon-based material and/or the above second carbon-based material includes primary particles. Optionally, the number proportion of the above primary particles in the above first carbon-based material is greater than or equal to 80%, and may be, for example, 80% to 100%, 85% to 90%, 90% to 100%, 95% to 100%, or 85% to 100%. The number proportion of the above primary particles in the above second carbon-based material is greater than or equal to 80%, and may be, for example, 80% to 100%, 85% to 90%, 90% to 100%, 95% to 100%, or 85% to 100%. By configuring the first carbon-based material and/or the second carbon-based material to contain an appropriate proportion of primary particles, the first carbon-based material and/or the second carbon-based material can achieve high structural stability, and the occurrence of side reactions can be reduced, thereby improving the cycle performance of the secondary battery. In addition, the compaction density of the negative electrode film layer can also be improved, thereby further increasing the energy density of the secondary battery.

In some embodiments, preferably, 1.8 ≤ S₂/S₁ ≤ 199.8. For example, the relationship may be 2 ≤ S₂/S₁ ≤ 199.8, 2 ≤ S₂/S₁ ≤ 190, 2.3 ≤ S₂/S₁ ≤ 180, or 2.3 ≤ S₂/S₁ ≤ 170. More preferably, 2.3 ≤ S₂/S₁ ≤ 148.7. For example, the relationship may be 3.0 ≤ S₂/S₁ ≤ 140 or 4.0 ≤ S₂/S₁ ≤ 100. Through further research, the inventors have found that when S₂/S₁ still falls within the above range, the secondary battery can better achieve both good kinetic performance and good cycle performance.

In the present disclosure, the total pore area S₁ of the external region and the total pore area S₂ of the internal region of the first carbon-based material can be obtained by measuring a cross-sectional image of the first carbon-based material.

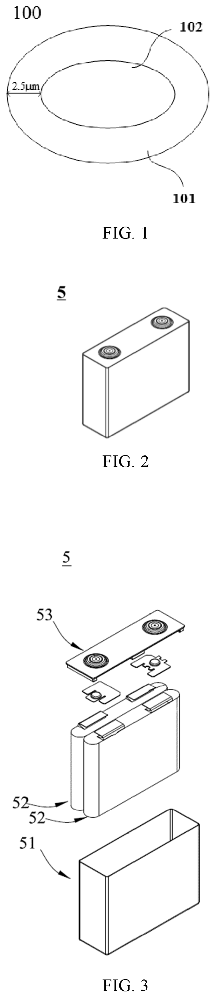

FIG. 1 is a schematic diagram of a cross-sectional image of a particle of a first carbon-based material 100 according to the present disclosure. As shown in FIG. 1, the region formed by extending from the surface of the particle of the first carbon-based material 100 to the interior of the particle by a distance of 2.5 µm is an external region 101, and the region at the inner side of the external region 101 is an internal region 102.

In the present disclosure, the pore area, S₁, and S₂ values of the first carbon-based material can acquire a cross-section of the first carbon-based material by using a cross-section polisher (e.g., the IB-09010 CP argon ion cross-section polisher from JEOL Ltd., Japan); then, with reference to JY/T010-1996, the cross-section of the first carbon-based material is scanned using a scanning electron microscope (e.g., the Sigma 300 scanning electron microscope from ZEISS, Germany); finally, the pore area of any pore in the first carbon-based material, the total pore area S₂ of the internal region, and the total pore area S₁ of the external region are acquired using image processing software (e.g., AVIZO), thereby obtaining the value of S₂/S₁. Illustratively, samples may be obtained from different regions of the negative electrode plate in the secondary battery, at least 5 (e.g., 5, 10, 15, or even more) positions are randomly selected from the sample to acquire the cross-sections by using a cross-section polisher. The cross-sections of at least 10 particles (e.g., 10, 20, 50, or even more particles) are randomly selected from scanning electron microscope images of the cross-sections, and the total pore area S2' of the internal region and the total pore area S1' of the external region of each particle cross-section are acquired by using image processing software according to the above definition, thereby obtaining the value of S2'/S1' of each particle cross-section. The arithmetic mean value of S2'/S1' of all measured particle cross-sections is calculated as the S₂/S₁ value of the first carbon-based material.

In some embodiments, the area of the above pore structure in the external region of the above first carbon-based material is less than or equal to 0.15 µm², optionally less than or equal to 0.13 µm². Through further research, the inventors have further found that by controlling the area of the pore structure in the external region of the first carbon-based material to fall within the above range, the external region of the first carbon-based material can achieve a dense structure, thereby effectively improving the structural stability of the first carbon-based material, preventing the electrolytic solution from infiltrating into the pore structure inside the particles of the first carbon-based material as much as possible, and further effectively improving the cycle performance of the secondary battery. Certainly, the present disclosure is not intended to limit the area of all the pore structures in the external region of the first carbon-based material to be less than or equal to 0.15 µm². For example, more than 95%, optionally more than 99%, of the pore structures may be controlled to have an area of less than or equal to 0.15 µm².

In some embodiments, the internal region of the above first carbon-based material includes one or more pore structures having an area greater than or equal to 0.15 µm², and optionally includes one or more pore structures having an area of 0.15 µm² to 2.0 µm². Through further research, the inventors have further found that by configuring the internal region of the first carbon-based material to include the pore structure of the above size, in one aspect, sufficient and stable expansion space can be reserved for the volume change of the particles of the first carbon-based material, the risk of particle fracture of the first carbon-based material is reduced, and the occurrence of side reactions is reduced; in another aspect, the compaction density of the negative electrode film layer can be improved, and the volume change of the negative electrode film layer can be buffered.

In some embodiments, at least part of the surface of the above first carbon-based material is provided with a coating layer. Optionally, the above coating layer includes a carbon coating layer. Optionally, 80% or more of the surface of the above first carbon-based material is covered with the carbon coating layer. Further, 90% to 100% of the surface of the above first carbon-based material is covered with the carbon coating layer. In some embodiments, the carbon in the above coating layer includes amorphous carbon and/or crystalline carbon having a degree of graphitization between 68% and 90%. Therefore, by providing the coating layer on at least part of the surface of the first carbon-based material, the kinetic performance of the secondary battery can be further improved.

In some embodiments, the specific capacity of the above first carbon-based material is greater than or equal to 355 mAh/g, optionally 355 mAh/g to 370 mAh/g. Therefore, the energy density of the secondary battery is further increased.

In some embodiments, the true density of the above first carbon-based material is 2.22 g/cm³ to 2.27 g/cm³, optionally 2.23 g/cm³ to 2.26 g/cm³. When the true density of the first carbon-based material falls within the above range, it is beneficial to improving the compaction density of the negative electrode film layer, thereby further increasing the energy density of the secondary battery.

In some embodiments, the powder compaction density of the above first carbon-based material under a pressure of 20000 N is 1.65 g/cm³ to 2.0 g/cm³, optionally 1.68 g/cm³ to 1.98 g/cm³. When the powder compaction density of the first carbon-based material falls within the above range, the compaction density of the negative electrode film layer can be improved, and the energy density of the secondary battery can be increased. Furthermore, it is also beneficial to forming a proper pore channel structure between the particles of the negative electrode film layer, improving the transport performance of active ions and electrons, and enhancing the wettability and retention characteristics of the negative electrode film layer with respect to the electrolytic solution, thereby improving the kinetic performance and cycle performance of the secondary battery.

In some embodiments, the volume distribution particle size Dv50 of the above first carbon-based material is 8.0 µm to 25.0 µm, optionally 10.0 µm to 22.0 µm. In some embodiments, the volume distribution particle size Dv90 of the above first carbon-based material is 16.0 µm to 45.0 µm, optionally 16.5 µm to 42.0 µm. When the volume distribution particle size Dv50 and/or Dv90 of the first carbon-based material falls within the above range, it is beneficial to improving the transport performance of active ions and electrons, thereby further improving the kinetic performance of the secondary battery. In addition, the specific surface area of the first carbon-based material can be reduced, the occurrence of side reactions can be reduced, and the cycle performance of the secondary battery can be improved.

In some embodiments, the particle size distribution (Dv90-Dv10)/Dv50 of the above first carbon-based material is less than or equal to 1.55, optionally 0.90 to 1.50. When the particle size distribution (Dv90-Dv10)/Dv50 of the first carbon-based material falls within the above range, the particle packing efficiency of the first carbon-based material is good, which is beneficial to improving the compaction density of the negative electrode film layer, thereby further increasing the energy density of the secondary battery. In addition, it is also beneficial to adjusting the pore distribution of the negative electrode film layer, improving the transport performance of active ions and electrons, and enhancing the wettability and retention characteristics of the negative electrode film layer with respect to the electrolytic solution, thereby improving the kinetic performance and cycle performance of the secondary battery.

In some embodiments, the tap density of the above first carbon-based material is 0.85 g/cm³ to 1.30 g/cm³, optionally 0.90 g/cm³ to 1.25 g/cm³. When the tap density of the first carbon-based material falls within the above range, the first carbon-based material exhibits relatively good processability, and the compaction density of the negative electrode film layer can be improved, thereby increasing the energy density of the secondary battery.

In some embodiments, the adsorption amount of linseed oil by 100 g of the above first carbon-based material is 30 mL to 47 mL. When the adsorption amount of linseed oil by the carbon material falls within the above range, the first carbon-based material exhibits relatively good processability, and the surface side reaction activity of the particles is relatively low. Therefore, the consumption of active ions due to the formation of SEI film can be reduced.

In some embodiments, the I_{D}/I_{G} of the above first carbon-based material is less than or equal to 0.280, optionally 0.155 to 0.220. Therefore, the consumption of active lithium can be effectively reduced, and the cycle performance can be further improved while maintaining kinetic performance.

In some embodiments, the specific capacity of the above second carbon-based material is 280 mAh/g to 340 mAh/g, optionally 300 mAh/g to 338 mAh/g. Therefore, it is beneficial to improving the kinetic performance of the secondary battery. In some embodiments, the interlayer spacing of the 002 crystal plane of the above second carbon-based material is 0.33622 nm to 0.33669 nm, optionally 0.33626 nm to 0.33665 nm. By adjusting the interlayer spacing of the second carbon-based material within the above range, rapid deintercalation of active ions is facilitated, such that it is beneficial to improving the active ion transport performance of the negative electrode film layer. Therefore, the kinetic performance of the secondary battery is further improved.

In some embodiments, the volume distribution particle size Dv50 of the above second carbon-based material is 10 µm to 18 µm, optionally 12 µm to 17 µm. By setting the volume distribution particle size Dv50 of the second carbon-based material within the above range, the specific surface area of the second carbon-based material can be reduced, the occurrence of side reactions can be reduced, and the cycle performance of the secondary battery can be improved.

In some embodiments, the tap density of the above second carbon-based material is 0.95 g/cm³ to 1.35 g/cm³, optionally 1.00 g/cm³ to 1.30 g/cm³. By setting the tap density of the second carbon-based material within the above range, the second carbon-based material exhibits relatively good processability, and meanwhile, the compaction density of the negative electrode film layer can be improved, thereby increasing the energy density of the secondary battery.

In some embodiments, the volume distribution particle size Dv90 of the above second carbon-based material is 25.0 µm to 45.0 µm, optionally 26.5 µm to 42.0 µm. The second carbon-based material exhibits relatively good processability, and it is beneficial for the negative electrode film layer to achieve an appropriate pore distribution, thereby improving the kinetic performance of the secondary battery.

In some embodiments, the particle size distribution (Dv90-Dv10)/Dv50 of the above second carbon-based material is less than or equal to 1.90, optionally 0.90 to 1.85. It is beneficial to improving the compaction density of the negative electrode film layer and increasing the energy density of the secondary battery. In addition, it is also beneficial to forming a proper pore channel structure between the particles of the negative electrode film layer, and improving the transport performance of active ions and electrons in the negative electrode film layer, thereby improving the kinetic performance of the secondary battery.

In some embodiments, the adsorption amount of linseed oil by 100 g of the above second carbon-based material is 38 mL to 50 mL. When the adsorption amount of linseed oil by the carbon material falls within the above range, the second carbon-based material particles exhibit relatively good processability, and the surface side reaction activity is relatively low. Therefore, the consumption of active ions due to the formation of SEI film can be reduced.

In some embodiments, the content of the above first carbon-based material in the above negative electrode active material is greater than or equal to 30%, optionally 50 wt% to 80 wt%. For example, the content may be 55 wt% to 75 wt% or 60 wt% to 70 wt%. The content of the above second carbon-based material in the above negative electrode active material is less than or equal to 70%, for example, 20 wt% to 50 wt%, optionally 25 wt% to 45 wt% or 30 wt% to 40 wt%. When the contents of the first carbon-based material and the second carbon-based material fall within the above ranges, the secondary battery can achieve both high energy density and good kinetic performance and cycle performance.

Optionally, the above second carbon-based material includes artificial graphite. The artificial graphite generally refers to crystalline carbon obtained through graphitization and high-temperature treatment, and usually does not have pore structures inside, or does not have pore structures that can be directly observed from a cross-sectional image (e.g., a scanning electron microscope image with 1000-fold magnification).

In some embodiments, the I_{D}/I_{G} of the above second carbon-based material is 0.20 to 0.40, optionally 0.25 to 0.35. Therefore, the kinetic performance can be further improved.

In some embodiments, the above negative electrode active material may further include other negative electrode active materials known in the art in addition to the above first carbon-based material and the above second carbon-based material. For example, the above negative electrode active material may further include a silicon-based material. The higher lithium intercalation potential of the silicon-based material facilitates improving the kinetic performance of the secondary battery, and can also improve the capacity of the negative electrode, thereby further increasing the energy density of the secondary battery. Optionally, the above silicon-based material may include one or more of elemental silicon, an oxide of silicon, a silicon-carbon composite, a silicon-nitrogen composite, and a silicon alloy material.

In some embodiments, when the above negative electrode active material in the above negative electrode film layer further includes a silicon-based material, the content of the above silicon-based material is 0.5 wt% to 30 wt%. For example, the content may be 0.8% to 25%, 1% to 20%, 1% to 15%, 1% to 10%, 1.5% to 8%, 2% to 6%, or 3% to 7%. Therefore, the kinetic performance and the energy density of the secondary battery can be improved while achieving good cycle performance and cycle performance of the secondary battery.

In some embodiments, the above negative electrode film layer further optionally includes a negative electrode conductive agent. The present disclosure does not particularly limit the type of the negative electrode conductive agent. As an example, the negative electrode conductive agent may include one or more of superconducting carbon, conductive graphite, acetylene black, carbon black, Ketjen black, a carbon dot, a carbon nanotube, graphene, and a carbon nanofiber.

In some embodiments, the above negative electrode film layer further optionally includes a negative electrode binder. The present disclosure does not particularly limit the type of the negative electrode binder. As an example, the negative electrode binder may include one or more of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the above negative electrode film layer further optionally includes other auxiliary agents. As an example, other auxiliary agents may include thickeners, such as sodium carboxymethylcellulose (CMC) and PTC thermistor materials.

In some embodiments, the compaction density of the above negative electrode film layer is 1.45 g/cm³ to 1.90 g/cm³, optionally 1.50 g/cm³ to 1.85 g/cm³. Therefore, this is beneficial to enabling the negative electrode film layer to achieve both a high capacity and high active ion and electron transport performance, thereby facilitating the secondary battery to achieve both high energy density and good cycle performance and kinetic performance.

In some embodiments, the areal density of the above negative electrode film layer is 5.0 mg/cm² to 25.0 mg/cm², optionally 5.5 mg/cm² to 22.5 mg/cm². Therefore, this is beneficial to enabling the negative electrode film layer to achieve both a high capacity and high active ion and electron transport performance, thereby facilitating the secondary battery to achieve both high energy density and good cycle performance and kinetic performance.

In some embodiments, the thickness of the above negative electrode film layer is 40 µm to 120 µm, optionally 45 µm to 100 µm.

In some embodiments, a metal foil or a composite current collector may be used as the above negative electrode current collector. As an example of the metal foil, a copper foil may be used. The above composite current collector may include a polymer material base layer and a metal material layer formed on at least one surface of the above polymer material base layer. As an example, the above metal material may include one or more of copper, a copper alloy, nickel, a nickel alloy, titanium, a titanium alloy, silver, and a silver alloy. As an example, the above polymer material base layer may include one or more of polypropylene (PP), polyethylene terephthalate (PET), polybutylene terephthalate (PBT), polystyrene (PS), and polyethylene (PE).

The negative electrode current collector is provided with two surfaces opposite to each other in its own thickness direction, and the negative electrode film layer is disposed on any one or both of the two opposite surfaces of the negative electrode current collector. It should be noted that the parameters of the negative electrode film layer provided in the present disclosure (e.g., compaction density, areal density, and thickness) refer to the parameters of the negative electrode film layer on one side of the negative electrode current collector. When the negative electrode film layer is disposed on both sides of the negative electrode current collector, if the parameters of the negative electrode film layer on either side meet the requirements of the present disclosure, it shall be considered to fall within the protection scope of the present disclosure.

In the present disclosure, the above negative electrode plate may further include other additional functional layers in addition to the above negative electrode film layer. For example, in some embodiments, the negative electrode plate further includes a conductive bottom coating (e.g., composed of a conductive agent and a binder) interposed between the above negative electrode current collector and the above negative electrode film layer and disposed on the surface of the above negative electrode current collector. In some embodiments, the negative electrode plate further includes a protective layer covering the surface of the above negative electrode film layer.

In the present disclosure, the degree of graphitization of the material (e.g., the first carbon-based material or the second carbon-based material) has a meaning well known in the art, and can be measured using instruments and methods known in the art. For example, an X-ray diffractometer (e.g., Bruker D8 Discover) may be used for the measurement. The measurement may be performed with reference to JIS K 0131-1996 and JB/T 4220-2011 to obtain the average interlayer spacing d₀₀₂ of the C(002) crystal plane in the crystal structure of the material, and then the degree of graphitization is calculated according to the formula g = (0.344 - d₀₀₂)/(0.344 - 0.3354) × 100%. In the above formula, d₀₀₂ is the average interlayer spacing of the C(002) crystal plane in the crystal structure of the material in nanometers (nm).

In the present disclosure, the interlayer spacing of the C(002) crystal plane of the material (e.g., the first carbon-based material or the second carbon-based material) has a meaning well known in the art, and can be measured using instruments and methods known in the art. For example, an X-ray diffractometer (e.g., Bruker D8 Discover) may be used for the measurement. The measurement may be performed with reference to JIS K 0131-1996 and JB/T 4220-2011 to obtain the interlayer spacing of the C(002) crystal plane in the crystal structure of the material.

In the present disclosure, the specific capacity of the material (e.g., the first carbon-based material or the second carbon-based material) has a meaning well known in the art, and can be determined using methods known in the art. An exemplary determination method is as follows: The sample powder, a conductive agent carbon black (Super P), and a binder polyvinylidene fluoride (PVDF) are mixed uniformly in a mass ratio of 91.6:1.8:6.6 in a solvent N-methylpyrrolidone (NMP) to obtain a slurry; the prepared slurry is applied to a surface of a negative electrode current collector copper foil and dried in an oven for later use; ethylene carbonate (EC), ethyl methyl carbonate (EMC), and diethyl carbonate (DEC) are mixed in a volume ratio of 1:1:1 to obtain an organic solvent, and then LiPF₆ is dissolved in the above organic solvent to prepare an electrolytic solution with a concentration of 1 mol/L; then, a CR2430 button battery is assembled using the electrolytic solution in an argon-protected glove box with a metallic lithium foil as the counter electrode and a polyethylene (PE) thin film as the separator; the obtained button battery is left to stand for 12 h, then discharged at a constant current of 0.05C to 0.005 V at 25 °C, left to stand for 10 min, then discharged at a constant current of 50 µA to 0.005 V, left to stand for 10 min, and then discharged at a constant current of 10 µA to 0.005 V, and then charged at a constant current of 0.1C to 2 V, and the charge capacity is recorded. The ratio of the charge capacity to the mass of the sample is defined as the specific capacity of the corresponding material (e.g., the first carbon-based material or the second carbon-based material).

In the present disclosure, the I_{D}/I_{G} of the first carbon-based material and the second carbon-based material may be measured using a Raman spectrometer, where I_{D} denotes the D peak intensity at 1350 ± 50 cm⁻¹ in the Raman spectrum of the material, and I_{G} denotes the G peak intensity at 1580 ± 50 cm⁻¹ in the Raman spectrum of the material. The measurement conditions are: an excitation wavelength of 532 nm, a grating of 600 grooves, an objective lens of 50 folds, an integration time of 10 s, a total of 3 times, and plane scanning. The D peak and G peak intensities of 100 points are acquired, and the I_{D}/I_{G} values of the 100 points are calculated. 30 maximum and 30 minimum I_{D}/I_{G} values are removed, and the average value of the remaining 40 points is the I_{D}/I_{G} of the material. The Horiba LabRAM HR800 Raman spectrometer may be used as the test instrument.

In the present disclosure, whether the coating layer is present on the surface of the material (e.g., the first carbon-based material or the second carbon-based material) can be determined by a transmission electron microscope.

In the present disclosure, the true density of the material (e.g., the first carbon-based material or the second carbon-based material) has a meaning well known in the art, and can be measured using methods known in the art. With reference to the standard GB/T 24586-2009, an exemplary measurement method is as follows: A clean and dry sample cup is placed on a balance, and the balance is tared to zero; the powder sample is added into the sample cup until about 1/2 of the cup volume is filled, and the mass of the sample is recorded. The sample cup containing the sample is placed in a true density tester. The test system is sealed, and helium gas is introduced according to the test program. The pressures of the gas in the sample chamber and the expansion chamber are detected, and then the true volume is calculated according to Boyle's law (PV = nRT), such that the true density is determined. The volume of the sample cup used for the test is 3.5 cm³, and the analysis gas is helium gas.

In the present disclosure, the volume distribution particle sizes Dv10, Dv50, and Dv90 of the material (e.g., the first carbon-based material or the second carbon-based material) have meanings well known in the art, which respectively represent the particle sizes corresponding to the cumulative volume distribution percentages of the material reaching 10%, 50%, and 90%, and can be measured using instruments and methods known in the art. For example, the measurement may be performed with reference to GB/T 19077-2016 using a laser particle size analyzer. The test instrument may be the Mastersizer 3000 laser particle size analyzer from Malvern Instruments Ltd., United Kingdom.

In the present disclosure, the powder compaction density of the material (e.g., the first carbon-based material or the second carbon-based material) has a meaning well known in the art, and can be measured using instruments and methods known in the art. For example, the measurement may be performed with reference to GB/T 24533-2009 using an electronic compression tester (e.g., UTM7305 electronic compression tester). An exemplary measurement method is as follows: 1 g of sample powder is placed into a mold with a base area of 1.327 cm², the pressure is increased to 2000 kg and held for 30 s, then the pressure is released and held for 10 s, and subsequently the powder compaction density of the material under the pressure of 20000 N is recorded and calculated.

In the present disclosure, the tap density of the material (e.g., the first carbon-based material or the second carbon-based material) has a meaning well known in the art, and can be measured using instruments and methods known in the art. For example, the measurement may be performed with reference to GB/T 5162-2006 using a powder tap density analyzer. The test instrument may be a Bettersize BT-301, with the following parameters: vibration frequency of 250 ± 15 times/minute, amplitude of 3 ± 0.2 mm, total vibrations of 5000 times, and graduated cylinder volume of 25 mL.

In the present disclosure, the adsorption amount of linseed oil by 100 g of the first carbon-based material may be tested according to the following method: With reference to GB/T 3780.2-2017, a certain mass (e.g., 20 g) of the dried test sample is weighed out and the weighed sample is placed in a mixing chamber of an oil absorption meter, the temperature of the mixing chamber is maintained at 22 °C to 23 °C, and the mixing chamber is covered with a lid. An oil delivery outlet of the constant-velocity burette is aligned above the orifice of the mixing chamber lid. The oil absorption meter is started, the instrument starts operation, and linseed oil is added dropwise. As the oil absorption amount by the sample increases, the mixture changes from a free-flowing state into a semi-plastic agglomerate, and the viscosity of the mixture continuously increases. Then, this viscosity is transmitted to a torque sensor system of the oil absorption meter. When the dripped oil causes the semi-plastic agglomerate to reach a preset torque level, the oil absorption meter and the constant-velocity burette are automatically shut off. The value corresponding to 70% of the maximum torque of the fitted curve is read, and the adsorption amount A of linseed oil by 100 g of the carbon material is calculated using the formula A = (V/m) × 100, where V denotes the volume (expressed in mL) of linseed oil consumed by the sample at 70% of the maximum torque; and m denotes the mass (expressed in g) of the added sample.

In the present disclosure, the primary particles have a meaning well known in the art. The primary particles refer to particles in a non-agglomerated state, and particles in an agglomerated state formed by aggregation of the primary particles are secondary particles. The primary particles and the secondary particles can be distinguished by using scanning electron microscope (SEM) images.

In the present disclosure, the number proportion of the primary particles in the first carbon-based material and/or the second carbon-based material is determined as follows: A test sample is randomly selected from the negative electrode film layer, a plurality of test regions are randomly selected from the test sample, and images of the plurality of test regions are acquired using a scanning electron microscope. The number proportion of the first carbon-based material particles exhibiting a primary particle morphology in the total number of the particles of the first carbon-based material is counted in each image. The average value of the plurality of statistical results is taken as the number proportion of the primary particles in the first carbon-based material.

In the present disclosure, the areal density of the negative electrode film layer has a meaning well known in the art and can be measured using methods known in the art. For example, a single-side coated and cold-pressed negative electrode plate may be used (if a double-side coated negative electrode plate is used, the negative electrode film layer on one side may be wiped off first) and punched into small circular samples with an area of S₁. The sample is weighed, and the weight is recorded as M₁. The negative electrode film layer of the above weighed negative electrode plate is then wiped off, and the weight of the negative electrode current collector is measured and recorded as M₀. The areal density of the negative electrode plate = (M₁ - M₀)/S₁.

In the present disclosure, the compaction density of the negative electrode film layer has a meaning well known in the art and can be measured using methods known in the art. The compaction density of the negative electrode film layer = the areal density of the negative electrode film layer/the thickness of the negative electrode film layer. The thickness of the negative electrode film layer has a meaning well known in the art and can be measured using methods known in the art, for example, using a micrometer (e.g., Mitutoyo293-100, with precision of 0.1 µm).

It should be noted that various parameter tests for the negative electrode active material or the negative electrode film layer described above may be performed by sampling from a prepared secondary battery according to the following steps.

The secondary battery is subjected to a discharge process (for safety reasons, the secondary battery is typically in a fully discharged state). After disassembly of the secondary battery, the negative electrode plate is extracted and immersed in dimethyl carbonate for a certain period (e.g., 2 h to 10 h). The negative electrode plate is then removed and subjected to a drying process at a certain temperature for a certain duration (e.g., 60 °C for more than 4 h). After drying, the negative electrode plate is collected. At this point, samples can be taken from the dried negative electrode plate to test the above parameters related to the negative electrode film layer, such as the areal density, compaction density, and thickness of the negative electrode film layer.

The dried negative electrode plate described above is then baked at a certain temperature for a certain duration (e.g., 400 °C for more than 2 h). From the baked negative electrode plate, a region is randomly selected, and sampling of the negative electrode active material is performed (e.g., using a blade to scrape for powder collection). The collected negative electrode active material is sieved (e.g., using a 200-mesh sieve), so as to ultimately obtain samples that can be used to test the negative electrode active material parameters described above.

The first carbon-based material and the second carbon-based material can be distinguished by a cross-section polisher. For example, the types of the first carbon-based material and the second carbon-based material may be distinguished by performing an ion-polished cross-sectional (CP) morphology test on the negative electrode plate. As an example, the test method may be as follows: The negative electrode plate is cut into samples to be tested with a certain size (e.g., 2 cm × 2 cm), and fixed on a sample stage using paraffin. The sample stage is placed into a sample holder and locked in place, an argon ion cross-section polisher (e.g., the IB-09010 CP argon ion cross-section polisher from JEOL Ltd., Japan) is turned on and evacuated (e.g., 10⁻⁴ Pa). After setting the argon flow (e.g., 0.15 MPa), voltage (e.g., 8 KV), and polishing time (e.g., 2 h), the sample stage is adjusted to an oscillation mode to begin polishing. A region of the sample to be tested is randomly selected for scanning (e.g., scanning using a scanning electron microscope with reference to JY/T010-1996), and the ion-polished cross-sectional morphology (CP) image of the negative electrode plate is obtained at a certain magnification (e.g., 1000-fold). The first carbon-based material and the second carbon-based material can be distinguished from the image.

In the present disclosure, the second carbon-based material may be commercially available and may be prepared by a well-known method. In addition, the above first carbon-based material may be prepared by the following method of the present disclosure.

In some embodiments, the preparation method for the above first carbon-based material includes: step 1, providing a raw material having a plurality of pore structures; step 2, uniformly mixing the above raw material and a filling material according to a predetermined proportion, holding the mixture at a first temperature T₁ for a first duration t₁, and then cooling the mixture to room temperature to obtain an intermediate; and step 3, holding the obtained intermediate at a second temperature T₂ for a second duration t₂, so as to obtain the first carbon-based material.

In some embodiments, in step 1, the above raw material used for preparing the above first carbon-based material includes natural graphite. Natural graphite generally refers to graphite naturally formed in nature, which does not require graphitization. Optionally, the above natural graphite includes one or more of flake graphite, natural spherical graphite, and microcrystalline graphite, and more optionally includes natural spherical graphite.

The "natural spherical graphite" refers to natural graphite having a spherical or spheroidal shape, and not all natural graphite particles are controlled to be ideal spheres. In some embodiments, flake graphite may be pretreated to obtain natural spherical graphite with a desired particle size and desired morphology. Optionally, the above pretreatment includes processes such as crushing, classification, spheroidization, and purification.

In some embodiments, in step 1, the volume distribution particle size Dv50 of the above raw material may be 6.0 µm to 25.0 µm.

In some embodiments, in step 1, the specific surface area of the above raw material may be ≥ 2.5 m²/g, optionally 2.5 m²/g to 10.0 m²/g. When the specific surface area of the raw material falls within the above range, it is beneficial to performing subsequent filling treatment and obtaining the first carbon-based material with the required specific surface area, and it is also beneficial for the first carbon-based material to simultaneously possess high capacity and high initial coulombic efficiency. In addition, it is also beneficial for the first carbon-based material to achieve better kinetic performance.

In some embodiments, in step 2, the softening point temperature of the above filling material is 90 °C to 150 °C. Optionally, the softening point temperature of the above filling material is 94 °C to 146 °C, 94 °C to 142 °C, 94 °C to 138 °C, 94 °C to 134 °C, 94 °C to 130 °C, 104 °C to 146 °C, 104 °C to 142 °C, 104 °C to 138 °C, 104 °C to 134 °C, or 104 °C to 130 °C.

In some embodiments, in step 2, the volume distribution particle size Dv50 of the above filling material is less than or equal to 6 µm, optionally 1 µm to 6 µm, 1 µm to 5 µm, 2 µm to 5 µm, or 3 µm to 5 µm. Therefore, it is beneficial to filling the pore structure of the raw material with molten filling materials and to improving the dispersion uniformity of the filling materials and the raw material.

In some embodiments, in step 2, the coke yield of the above filling material is 15% to 40%, optionally 18% to 34%. In the present disclosure, the coke yield of the filling material has a meaning well known in the art, and can be determined by instruments and methods known in the art. For example, the determination may be performed with reference to GB/T 8727-2008.

In some embodiments, in step 2, the above filling material includes one or more of coal pitch, petroleum pitch, polymer compound, and resin, and optionally includes one or more of coal pitch and petroleum pitch.

In some embodiments, in step 2, the mass ratio of the above filling material to the above raw material is (10-40):100, optionally (10-30):100, (10-25):100, (10-20):100, (12-30):100, (14-28):100, or (15-25):100. Generally, when other process conditions remain unchanged, the larger the addition amount of the filling material, the higher the I_{D}/I_{G} of the first carbon-based material. Those skilled in the art can make adjustments within the above mass ratio ranges according to requirements to obtain the required I_{D}/I_{G} value.

In step 2, by adjusting one or more parameters of the filling material such as the type, the softening point, the coke yield, and the addition amount within the above ranges, it is beneficial to adjusting the number and/or size of pores in the external region and the internal region of the first carbon-based material within an appropriate range, thereby facilitating the adjustment of S₂/S₁ of the first carbon-based material within an appropriate range.

By adjusting parameters such as the type, the softening point, the coke yield, and the addition amount of the filling material within the above ranges, the molten filling material has low viscosity and good fluidity and is less likely to bond the raw material particles, such that the agglomeration of the raw material particles in the subsequent preparation process can be reduced, thereby further reducing problems such as an increase in surface defects and an increase in surface active sites of the first carbon-based material particles due to the need to add a depolymerization process.

In some embodiments, in step 2, the heating process of heating a uniform mixture of the above raw material and the above filling material in a predetermined ratio to the first temperature T₁ may be a staged heating process.

In some embodiments, the above staged heating process includes a first heating process, a second heating process, and a third heating process.

In some embodiments, the above first heating process is to raise the temperature to 200 °C to 250 °C and hold the temperature for 0.5 h to 3 h.

In some embodiments, the above second heating process is to raise the temperature to 450 °C to 550 °C and hold the temperature for 0 h to 2 h. When the holding time is 0 h, it means that when the temperature is raised to a range of 450 °C to 550 °C, no holding process is conducted, and the temperature continues to be raised to the first temperature T₁.

In some embodiments, the above third heating process is to raise the temperature to the first temperature T₁ and hold the temperature for the first duration t₁.

In the staged heating process, the temperature is first raised to 200 °C to 250 °C. Since the heating temperature is higher than the softening point temperature of the filling material, in this case, the filling material melts and softens upon heating, and a holding time of 0.5 h to 3 h allows the filling material to flow and fill the pore structure of the raw material; when the temperature is raised to 450 °C to 550 °C, the molten and softened filling material undergoes a carbonization reaction and gradually forms a semi-coke state to become a viscous liquid or solid, thereby preventing the filling material from entering all of the pore structures of the raw material; finally, when the temperature is raised to the first temperature, the filling material undergoes a carbonization reaction, thereby enabling the pore structures occupied by the filling material to be effectively filled.

In some embodiments, in step 2, the temperature is raised to the above first temperature T₁ at a rate of 1 °C/min to 10 °C/min. For example, the heating rate may be 1 °C/min, 2 °C/min, 3 °C/min, 4 °C/min, 5 °C/min, 6 °C/min, 7 °C/min, 8 °C/min, 9 °C/min, 10 °C/min, or in a range formed by any of the above values. Optionally, the heating rate is 1.5 °C/min to 8 °C/min, 1.5 °C/min to 6 °C/min, 2 °C/min to 6 °C/min, or 2 °C/min to 5 °C/min.

In some embodiments, the heating rate of the above first heating process may be 1 °C/min to 10 °C/min, optionally 1.5 °C/min to 8 °C/min, 1.5 °C/min to 6 °C/min, 2 °C/min to 6 °C/min, or 2 °C/min to 5 °C/min. In some embodiments, the heating rate of the above second heating process may be 1 °C/min to 10 °C/min, optionally 2 °C/min to 8 °C/min. In some embodiments, the heating rate of the above third heating process may be 1 °C/min to 10 °C/min, optionally 2 °C/min to 8 °C/min.

In some embodiments, in step 2, the above first temperature T₁ is 700 °C to 1200 °C. For example, the first temperature T₁ may be 700 °C, 750 °C, 800 °C, 850 °C, 900 °C, 950 °C, 1000 °C, 1050 °C, 1100 °C, 1200 °C, or in a range formed by any of the above values. Optionally, the above first temperature T₁ is 750 °C to 1100 °C, 800 °C to 1100 °C, 850 °C to 1100 °C, 900 °C to 1100 °C, or 850 °C to 1000 °C.

In some embodiments, in step 2, the above first duration t₁ is 1 h to 5 h. For example, the first duration t₁ may be 1 h, 1.5 h, 2 h, 2.5 h, 3 h, 3.5 h, 4 h, 4.5 h, 5 h, or in a range formed by any of the above values. Optionally, the above first duration t₁ is 2 h to 4 h.

In some embodiments, in step 2, the thermal treatment may be performed in a medium-frequency furnace, a roller kiln, a rotary kiln, a pusher kiln, a vertical pellet mill, a horizontal pellet mill, a vertical reaction kettle, a horizontal reaction kettle, a drum furnace, or other temperature-programmable devices.

In some embodiments, in step 2, the thermal treatment atmosphere may be a protective gas atmosphere. The above protective gas may include one or more of nitrogen, argon, and helium.

In step 2, by adjusting one or more of the heating rate, the first temperature, the first duration, the heating process, and the like within the above ranges, it is beneficial to adjusting the number and/or size of pores in the external region and the internal region of the first carbon-based material within an appropriate range, thereby facilitating the adjustment of S₂/S₁ of the first carbon-based material within an appropriate range.

In some embodiments, in step 3, the above second temperature T₂ is 2070 °C to 2700 °C. Optionally, the above second temperature T₂ is 2070 °C to 2570 °C, 2070 °C to 2510 °C, 2070 °C to 2450 °C, 2070 °C to 2360 °C, 2140 °C to 2570 °C, 2140 °C to 2510 °C, 2140 °C to 2450 °C, or 2140 °C to 2360 °C.

In some embodiments, in step 3, the above second duration t₂ is 1.5 h to 6 h. For example, the second duration t₁ may be 2 h, 2.5 h, 3 h, 3.5 h, 4 h, 4.5 h, 5 h, 5.5 h, 6 h, or in a range formed by any of the above values. Optionally, the above second duration t₂ is 2 h to 5 h.

In some embodiments, in step 3, the above thermal treatment may be performed in a medium-frequency furnace, a box-type graphitization furnace, an Acheson graphitization furnace, a continuous graphitization furnace, or an internal series graphitization furnace.

In some embodiments, in step 3, the medium-frequency furnace and the continuous graphitization thermal treatment atmosphere may be a protective gas atmosphere. The above protective gas may include one or more of nitrogen, argon, and helium.

In step 3, by adjusting one or more of the second temperature and the second duration within the above ranges, it is beneficial to adjusting the content of disordered carbon in the first carbon-based material within an appropriate range, thereby facilitating the first carbon-based material to achieve an appropriate degree of graphitization, appropriate interlayer spacing, appropriate I_{D}/I_{G}, and the like. Generally, when other process conditions remain unchanged, the higher the second temperature, the lower the I_{D}/I_{G} of the first carbon material. Those skilled in the art can make adjustments within the above temperature ranges according to requirements to obtain the required I_{D}/I_{G} value.

In the above preparation method for the first carbon-based material, by adjusting one or more of the parameters of the natural graphite, the parameters of the filling material, the heating rate, the first temperature, the first duration, the heating process, the second temperature, the second duration, and the like within the above ranges, it is beneficial to adjusting the parameters of the first carbon-based material, such as S₂/S₁, degree of graphitization, specific capacity, particle size, powder compaction density, tap density, and adsorption amount of linseed oil.

In some embodiments, the first carbon-based material obtained above is mixed with an organic carbon source and then subjected to carbonization treatment to form a carbon coating layer on at least part of the surface of the particles. Optionally, the above organic carbon source may be a carbon-containing material known in the art that is suitable for coating, and may include, for example, one or more of coal pitch, petroleum pitch, phenolic resin, coconut shell, and the like. Optionally, the temperature of the above carbonization is 900 °C to 1300 °C.

In some embodiments, the preparation method for the above second carbon-based material includes: step 11, providing a raw material; step 12, crushing and shaping the raw material to obtain a first intermediate; and step 13, graphitizing the first intermediate to obtain the second carbon-based material.

In some embodiments, in step 11, the raw material may include one or more of petroleum coke, needle coke, pitch coke, and metallurgical coke.

In some embodiments, in step 12, the raw material may be crushed using a mechanical mill or a roller mill. In addition, the shaping process may be performed using a shaper.

In some embodiments, in step 13, the temperature of the graphitization is 2700 °C to 3200 °C.

By adjusting the temperature of the graphitization and/or the duration of the graphitization, the second carbon-based material may achieve an appropriate degree of graphitization. In the above preparation method for the second carbon-based material, by adjusting one or more of the parameters (e.g., particle size, particle size distribution, and specific capacity) of the raw material, it is beneficial to adjusting the parameters of the second carbon-based material, such as degree of graphitization, interlayer spacing, specific capacity, particle size, and tap density.

### [Positive Electrode Plate]

In some embodiments, the above positive electrode plate includes a positive electrode current collector and a positive electrode film layer disposed on at least one surface of the above positive electrode current collector. For example, the above positive electrode current collector is provided with two surfaces opposite to each other in its own thickness direction, and the above positive electrode film layer is disposed on any one or both of the two opposite surfaces of the above positive electrode current collector.

A metal foil or a composite current collector may be used as the above positive electrode current collector. As an example of the metal foil, an aluminum foil may be used. The above composite current collector may include a polymer material base layer and a metal material layer formed on at least one surface of the above polymer material base layer. As an example, the above metal material may include one or more of aluminum, an aluminum alloy, nickel, a nickel alloy, titanium, a titanium alloy, silver, and a silver alloy. As an example, the above polymer material base layer may include one or more of polypropylene (PP), polyethylene terephthalate (PET), polybutylene terephthalate (PBT), polystyrene (PS), and polyethylene (PE).

The above positive electrode film layer generally includes a positive electrode active material, an optional binder, and an optional conductive agent. The above positive electrode film layer is generally formed by coating the above positive electrode current collector with a positive electrode slurry, drying, and cold pressing. The above positive electrode slurry is generally formed by dispersing a positive electrode active material, an optional conductive agent, an optional binder, and any other components in a solvent and stirring them uniformly. The solvent may be N-methylpyrrolidone (NMP), but is not limited thereto. As an example, the binder for use in the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin. As an example, the conductive agent for use in the positive electrode film layer includes one or more of superconducting carbon, conductive graphite, acetylene black, carbon black, Ketjen black, a carbon dot, a carbon nanotube, graphene, and a carbon nanofiber.

The above positive electrode active material may be any positive electrode active material well known in the art for use in secondary batteries.

When the secondary battery of the present disclosure is a lithium-ion battery, the above positive electrode active material the above positive electrode active material may include, but is not limited to, one or more of a lithium-containing transition metal oxide, a lithium-containing phosphate, and respective modified compounds thereof. Examples of the above lithium transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the above lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, in order to further improve the energy density of the secondary battery, the positive electrode active material for use in the lithium-ion battery may include one or more of lithium transition metal oxides with a general formula of LiₐNi_{b}Co_{c}M_{d}OₑA_{f} and modified compounds thereof, where 0.8 ≤ a ≤ 1.2, 0.5 ≤ b < 1, 0 < c < 1, 0 < d < 1, 1 ≤ e ≤ 2, 0 ≤ f ≤ 1, M is selected from one or more of the group consisting of Mn, Al, Zr, Zn, Cu, Cr, Mg, Fe, V, Ti, and B, and A is selected from one or more of the group consisting of N, F, S, and Cl.

In some embodiments, as an example, the positive electrode active material for use in the lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

In the present disclosure, the modified compounds of the above positive electrode active materials may be obtained by doping modification and/or surface-coating modification of the above positive electrode active materials.

### [Electrolyte]

In some embodiments, the above electrolyte is an electrolytic solution, where the above electrolytic solution includes an electrolyte salt and a solvent.

The types of the above electrolyte salt are not particularly limited, and a choice can be made as needed in practice.

When the secondary battery of the present disclosure is a lithium-ion battery, as an example, the above electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

The types of the above solvent are not particularly limited, and a choice can be made as needed in practice. In some embodiments, as an example, the above solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the above electrolytic solution further optionally includes an additive. For example, the above additive may include a negative electrode film-forming additive or a positive electrode film-forming additive, or may include an additive capable of improving certain properties of the secondary battery, such as an additive for improving the overcharge performance of the secondary battery, an additive for improving the high-temperature performance of the secondary battery, or an additive for improving the low-temperature power performance of the secondary battery.

### [Separator]

The present disclosure does not particularly limit the type of the above separator, and any porous-structure separator known to have good chemical stability and mechanical stability may be selected.

In some embodiments, the material of the above separator may include one or more of glass fiber, nonwoven fabric, polyethylene, polypropylene, and polyvinylidene fluoride. The above separator may be a single-layer film or a multi-layer composite film. When the above separator is a multi-layer composite film, the materials of the layers are the same or different.

In some embodiments, the above positive electrode plate, the above separator, and the above negative electrode plate may be manufactured into an electrode assembly through a winding process or a stacking process.

In some embodiments, the above secondary battery may include an outer packaging. The outer packaging can be used for packaging the electrode assembly and electrolyte described above.

In some embodiments, the outer packaging may be a hard shell, such as a hard plastic shell, an aluminum shell, or a steel shell. The outer packaging may also be a soft pack, such as a pouch-type soft pack. The above soft pack may be made of plastic, such as one or more of polypropylene (PP), polybutylene terephthalate (PBT), and polybutylene succinate (PBS).

The shape of the secondary battery is not particularly limited in the present disclosure and may be cylindrical, prismatic, or any other shape. FIG. 2 shows a secondary battery 5 having a prismatic structure as one example.

In some embodiments, as shown in FIG. 3, the outer packaging may include a housing 51 and a cover plate 53. The housing 51 may include a bottom plate and side plates connected to the bottom plate. The bottom plate and the side plates define, in an enclosing manner, an accommodating cavity. The housing 51 is provided with an opening communicating with the accommodating cavity, and the cover plate 53 is configured to lid the above opening to close the above accommodating cavity. The positive electrode plate, the negative electrode plate, and the separator may be subjected to a winding process or a stacking process to form an electrode assembly 52. The electrode assembly 52 is packaged in the above accommodating cavity. The electrolytic solution is infiltrated into the electrode assembly 52. The number of electrode assemblies 52 included in the secondary battery 5 may be one or more and may be adjusted as needed.

The preparation method for the secondary battery of the present disclosure is well known. In some embodiments, a positive electrode plate, a separator, a negative electrode plate, and an electrolytic solution may be assembled to form a secondary battery. As an example, the positive electrode plate, the separator, and the negative electrode plate may form an electrode assembly through a winding process or a stacking process. The electrode assembly is placed in an outer packaging and dried, and then the electrolytic solution is injected. After undergoing processes such as vacuum packaging, standing, formation, and shaping, a secondary battery is obtained.

In some embodiments of the present disclosure, the secondary battery according to the present disclosure may be assembled into a battery module. The number of secondary batteries included in the battery module may be plural, and the specific number may be adjusted according to the application and capacity of the battery module.

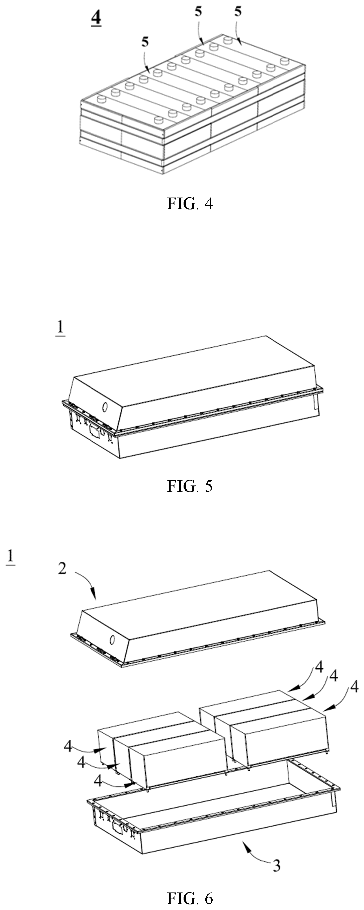

FIG. 4 is a schematic diagram of a battery module 4 as one example. As shown in FIG. 4, in the battery module 4, a plurality of secondary batteries 5 may be sequentially arranged in the length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the above battery module may further be assembled into a battery pack; the number of the battery modules included in the battery pack may be adjusted based on the application and capacity of the battery pack.

FIGs. 5 and 6 are schematic diagrams of a battery pack 1 as one example. As shown in FIGs. 5 and 6, the battery pack 1 may include a battery case and a plurality of battery modules 4 disposed in the battery case. The battery case includes an upper case body 2 and a lower case body 3. The upper case body 2 is configured to lid the lower case body 3 and the two form a closed space for accommodating the battery modules 4. The plurality of battery modules 4 may be arranged in any manner in the battery case.

The present disclosure further provides an electric device. The above electric device includes at least one of the secondary battery, the battery module, or the battery pack according to the present disclosure. The secondary battery, the battery module, or the battery pack described above may be used as a power source for the above electric device, and they may also be used as an energy storage unit for the above electric device. The above electric device may be, but is not limited to, a mobile device (e.g., a mobile phone, a tablet computer, or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

A secondary battery, a battery module, or a battery pack may be selected based on the use requirements of the above electric device.

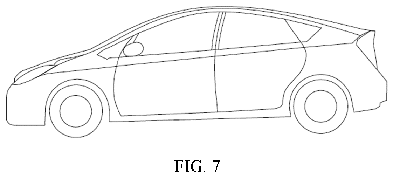

FIG. 7 is a schematic diagram of an electric device as one example. The electric device is a pure electric vehicle, a hybrid electric vehicle, a plug-in hybrid electric vehicle, or the like. To meet the requirements of the electric device for high power and high energy density of the battery, a battery pack or a battery module may be used.

As another example, the electric device may be a mobile phone, a tablet computer, a laptop computer, or the like. The electric device is generally required to be light and thin, and a secondary battery may thus be used as the power source.

### Examples

The following examples more specifically describe the content disclosed in the present disclosure. These examples are intended for illustrative purposes only, since various modifications and changes within the scope of the content disclosed in the present disclosure will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

### Preparation of first carbon-based material:

### Material 1-1

In step 1, flake graphite was mechanically crushed, classified, spheroidized, and purified to obtain natural spherical graphite. In step 2, the obtained natural spherical graphite was mixed with a filler petroleum pitch in a mass ratio of 100:23, where the petroleum pitch had a softening point of 120 °C and a coke yield of 36%, and then the mixed material was placed in a temperature-programmable device, heated to 200 °C and held for 1 h (the first heating process), and then continuously heated to 700 °C and held for 2 h (the third heating process). Then, the mixed material was cooled to room temperature to obtain an intermediate. In step 3, the obtained intermediate was placed in a graphitization furnace and subjected to thermal treatment at 2250 °C, and then subjected to demagnetization and sieving to obtain the first carbon-based material (material 1-1). For the obtained material 1-1: S₂/S₁ was 11.6, the degree of graphitization was 94.9%, I_{D}/I_{G} was 0.175, and the number proportion of primary particles was 80%.

The S₂/S₁ of the first carbon-based material was measured by the following method.

The binder for sample preparation was mixed uniformly with the first carbon-based material powder and then applied on a copper foil, and the copper foil was dried at 60 °C for 30 min for later use. Five samples to be measured with a size of 6 mm × 6 mm were cut from five different positions and separately pasted on a sample stage of a CP-type argon ion cross-section polisher. The samples were cut using a plasma beam to obtain the cross-sections of each sample. The test instrument might be the IB-09010 CP argon ion cross-section polisher from JEOL Ltd., Japan.

A scanning electron microscope was used to scan the cross-sections of the sample of the first carbon-based material, and scanning images were acquired from randomly selected regions of the sample cross-sections. For the measurement, reference might be made to JY/T010-1996. The test instrument might be the Sigma 300 scanning electron microscope from ZEISS, Germany.

Cross-sections of 20 particles of the first carbon-based material were randomly selected from the scanning images. The region extending from the surface of the particle of the first carbon-based material to the interior of the particle by a distance of 0.25 µm was denoted as the external region, and the region at the inner side of the external region was denoted as the internal region. The total pore area S1' of the external region of each particle cross-section and the pore area S2' of the internal region of the first carbon-based material were acquired using image processing software, and the value of S2'/S1' was calculated. The arithmetic mean value of S2'/S1' for all 20 particles was calculated as the S₂/S₁ value of the first carbon-based material. The image processing software might be AVIZO.

### Material 1-2 to material 1-4

The preparation methods for materials 1-2 to 1-4 were similar to the preparation method for material 1-1, except that: as shown in Table 1, the amounts of the spherical graphite and the filler and the thermal treatment temperature were adjusted, such that the degrees of graphitization of materials 1-2 to 1-4 were the values shown in Table 1. Details are as follows:

**Table 1.**

| Material number | Mass ratio of natural spherical graphite to filler | Thermal treatment temperature (°C) | Degree of graphitization of first carbon-based material |
|---|---|---|---|
| 1-2 | 100:35 | 2350 | 95.5% |
| 1-3 | 100:24 | 2650 | 98% |
| 1-4 | 100:20 | 2450 | 97% |

### Material 1-5 to material 1-9

The preparation methods for materials 1-5 to 1-9 were similar to the preparation method for material 1-1, except that: as shown in Table 2, the softening point temperature and the coke yield of the filling material, and the mixing ratio of the natural spherical graphite to the filler petroleum pitch were adjusted, and the third heating process was accordingly adjusted, such that S₂/S₁ of the first carbon-based material was the value shown in Table 2.

**Table 2**

| Material number | Softening point temperature of filling material (°C) | Coke yield of filling material | Mass ratio of natural spherical graphite to filler | Third heating process | S₂/S₁ |
|---|---|---|---|---|---|
| 1-5 | 140 | 38% | 100:14 | Heat to 900 °C at a heating rate of 5 °C/min | 1.8 |
| 1-6 | 120 | 36% | 100:16 | Heat to 900 °C at a heating rate of 6 °C/min | 2.3 |
| 1-7 | 110 | 32% | 100:26 | Heat to 780 °C at a heating rate of 6 °C/min | 148.7 |
| 1-8 | 108 | 31% | 100:28 | Heat to 750 °C at a heating rate of 4 °C/min | 199.8 |
| 1-9 | 105 | 30% | 100:30 | Heat to 700 °C at a heating rate of 3 °C/min | 250.6 |

### Material 1'-1

The preparation method for material 1'-1 was similar to the preparation method for material 1-1, except that adjustments were made as shown in Table 3, such that S₂/S₁ of the first carbon-based material was the value shown in Table 3.

**Table 3**

| Material number | Softening point temperature of filling material (°C) | Coke yield of filling material | Mass ratio of natural spherical graphite to filler | Third heating process | S₂/S₁ |
|---|---|---|---|---|---|
| 1'-1 | 250 | 67% | 100:8 | Heat to 900 °C at a heating rate of 6 °C/min | 0.92 |

### Material 1-10 to material 1-12

The preparation methods for materials 1-10 to 1-12 were similar to the above preparation method for material 1-1, except that: as shown in Table 4, the mixing ratio of the natural spherical graphite and the filler petroleum pitch and the thermal treatment temperature were adjusted, such that I_{D}/I_{G} values of the first carbon-based material were the values shown in Table 4.

**Table 4**

| Material number | Mass ratio of spherical graphite to filler | Thermal treatment temperature (°C) | First carbon-based material I_{D}/I_{G} |
|---|---|---|---|
| 1-10 | 100:20 | 2760 | 0.155 |
| 1-11 | 100:26 | 2450 | 0.220 |
| 1-12 | 100:30 | 2110 | 0.280 |

In the following examples and comparative examples, the second carbon-based material was commercially purchased (from Shanghai Shanshan Technology Co., Ltd. and Jiangxi Zichen Technology Co., Ltd.).

### Example 1

### Preparation of secondary battery

1. Negative electrode plate: A negative electrode active material (obtained by mixing material 1-1 (the first carbon-based material) and the second carbon-based material in a mass ratio of 70:30), a conductive agent carbon black (Super P), a thickener sodium carboxymethylcellulose, and a binder styrene-butadiene rubber were thoroughly stirred and mixed in an appropriate amount of deionized water solvent according to a weight ratio of 96.4:1:1.2:1.4 to form a negative electrode slurry. The negative electrode slurry was applied on two surfaces of a negative electrode current collector copper foil, and the copper foil was then subjected to drying and cold pressing to obtain the negative electrode plate.
2. Positive electrode plate: LiNi_{0.5}Co_{0.2}Mn_{0.3}O₂ (NCM523), a conductive agent carbon black (Super P), and a binder polyvinylidene fluoride were mixed in a weight ratio of 96:2:2, and an appropriate amount of solvent NMP was added. The mixture was stirred uniformly to obtain a positive electrode slurry. The positive electrode slurry was applied on two surfaces of a positive electrode current collector aluminum foil, and the aluminum foil was then subjected to drying and cold pressing to obtain the positive electrode plate.
3. Electrolytic solution: Ethylene carbonate (EC), ethyl methyl carbonate (EMC), and diethyl carbonate (DEC) were mixed in a volume ratio of 1:1:1 to obtain an organic solvent. Then, LiPF₆ was dissolved in the above organic solvent to prepare an electrolytic solution with a concentration of 1 mol/L.
4. Separator: A polypropylene film was used as the separator.
5. Secondary battery: The positive electrode plate and the negative electrode plate prepared above were stacked in sequence to enable the separator to be disposed between the positive electrode plate and the negative electrode plate for isolation, and then the stack was wound to obtain an electrode assembly. The electrode assembly was placed in an outer packaging and dried, and then the electrolytic solution was injected. After undergoing processes such as vacuum packaging, standing, formation, and shaping, a secondary battery was obtained.

### Examples 2 to 10

The battery preparation methods of Examples 2 to 10 were similar to the battery preparation method of Example 1, except that materials with different degrees of graphitization were selected for the first carbon-based material or the second carbon-based material, as detailed in Table 5.

### Comparative Example 1

Preparation was performed in the same manner as in Example 1, except that materials 1 to 4 were used as the first carbon-based material, and the second carbon-based material was not used.

### Comparative Example 2

Preparation was performed in the same manner as in Example 1, except that the first carbon-based material was not used.

### Comparative Example 3

Preparation was performed in the same manner as in Example 1, except that materials 1 to 4 were used as the first carbon-based material, and the degree of graphitization of the second carbon-based material was made higher than that of the first carbon-based material.

### Comparative Example 4

Preparation was performed in the same manner as in Example 1, except that material 1'-1 was used as the first carbon-based material.

### Performance Test

### (1) Energy density

At 25 °C, the secondary battery was charged at a constant current of 1/3C to 4.3 V, then charged at a constant voltage of 4.3 V to a current of 0.05C. Then, the secondary battery was left to stand for 5 min, and then discharged at a constant current of 1/3C to 2.8 V. The discharge energy of the battery at this point was recorded. The discharge energy of the battery divided by the weight of the battery was defined as the gravimetric energy density of the battery, expressed in Wh/kg. The measurement data were detailed in Table 5.

### (2) Expansion rate of electrode plate after 1200 cycles

The thickness of the negative electrode plate after cold pressing was recorded as H0. A secondary battery was fabricated using the negative electrode plate after cold pressing, the positive electrode plate, the separator, and the electrolytic solution. At 25 °C, the secondary battery was subjected to a 1C/1C cycle of 100% depth of discharge (100% DOD, meaning full charge followed by full discharge) in a Neware charge-discharge tester. The discharge capacity (i.e., initial capacity) of the first cycle was recorded as 100%, and the cycling was terminated after 1200 cycles. Then, the secondary battery was charged to 100% state of charge (SOC), the secondary battery was disassembled, and the thickness of the corresponding negative electrode plate was measured and recorded as H1.

The expansion rate of the negative electrode plate after 1200 cycles was calculated as (H1/H0 - 1) × 100%.

### (3) Cycle performance test of secondary battery

At 45 °C, the secondary batteries prepared above were charged at a constant current of 1C to the upper-limit cut-off voltage (corresponding to 100% SOC), and then charged at a constant voltage to a current of 0.05C. After being left to stand for 5 min, the secondary batteries were discharged at a constant current of 1C to the lower-limit cut-off voltage (corresponding to 0% SOC). The discharge capacity at this point was recorded as the discharge capacity of the first cycle. The secondary batteries were subjected to a cyclic charge-discharge test according to the above method, and the discharge capacity after each cycle was recorded. 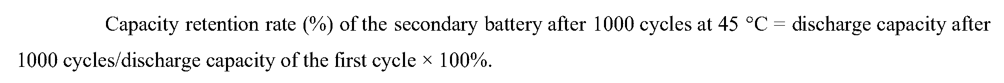 Capacity retention rate (%) of the secondary battery after 1000 cycles at 45 °C = discharge capacity after 1000 cycles/discharge capacity of the first cycle × 100%.

### (4) Rapid charge performance test of secondary battery

At 25 °C, the secondary batteries were charged at a constant current of 0.33C to 4.3 V, and then charged at a constant voltage until the current reached 0.05C. After being left to stand for 5 min, the secondary batteries were discharged at a constant current of 0.33C to 2.8V, and the actual capacity was recorded as C0.

Subsequently, the secondary batteries were charged sequentially at constant currents of 1.0 C0, 1.3 C0, 1.5 C0, 1.8 C0, 2.0 C0, 2.3 C0, 2.5 C0, and 3.0 C0 to either 4.3 V or the 0 V negative electrode cut-off potential, whichever occurred first. After each charge cycle, the batteries were discharged at 1 C0 to 2.8 V, and the negative electrode potential corresponding to 10%, 20%, 30%, ..., or 80% state of charge (SOC) was recorded for different charging rates. A charging rate-negative electrode potential curve was plotted for different states of charge (SOC), and linear fitting was performed to determine the charging rate corresponding to a negative electrode potential of 0 V at different states of charge (SOC). The charging rates were defined as the charge windows at the given SOC and were recorded as C10%SOC, C20%SOC, C30%SOC, C40%SOC, C50%SOC, C60%SOC, C70%SOC, and C80%SOC. The charging time T (under the condition that no lithium plating occurred in the secondary battery; expressed in min) required for charging the battery from 10% SOC to 80% SOC was calculated according to the formula: (60/C20%SOC + 60/C30%SOC + 60/C40%SOC + 60/C50%SOC + 60/C60%SOC + 60/C70%SOC + 60/C80%SOC) × 10%.

A shorter charging time indicates better kinetic performance of the secondary battery.

**Table 5**

| | First carbon-based material | | | | Second carbon-based material | | | A/ B | Battery performance | | | |
|---|---|---|---|---|---|---|---|---|---|---|---|---|
| Serial number | Material | I_{D}/I_{G} (A) | Degree of graphitization (%) | S₂/S₁ | I_{D} /I_{G} (B) | Number proportion of primary particles (%) | Degree of graphitization (%) | | Expansion rate of electrode plate after 1200 cycles | Capacity retention rate after 1000 cycles at 45 °C | Charging time T (min) | Energy density |
| Example 1 | 1-1 | 0.195 | 94.9% | 11.6 | 0.30 | 85% | 88.1% | 0.65 | 26.0% | 86.2% | 18.0 | 183.1 |
| Example 2 | 1-2 | 0.186 | 95.5% | 11.6 | 0.30 | 85% | 88.1% | 0.62 | 26.5% | 88.6% | 18.5 | 188.7 |
| Example 3 | 1-3 | 0.165 | 98% | 11.6 | 0.30 | 85% | 88.1% | 0.55 | 26.7% | 89.0% | 18.8 | 189.5 |
| Example 4 | 1-4 | 0.175 | 97% | 11.6 | 0.30 | 85% | 88.1% | 0.58 | 26.6% | 88.9% | 18.5 | 189.0 |
| Example 5 | 1-4 | 0.175 | 97% | 11.6 | 0.38 | 85% | 83% | 0.46 | 28.2% | 86.0% | 17.8 | 179.3 |
| Example 6 | 1-4 | 0.175 | 97% | 11.6 | 0.36 | 85% | 85% | 0.49 | 27.5% | 87.1% | 18.2 | 186.8 |
| Example 7 | 1-4 | 0.175 | 97% | 11.6 | 0.34 | 85% | 85.5% | 0.51 | 26.7% | 88.8% | 18.3 | 187.2 |
| Example 8 | 1-4 | 0.175 | 97% | 11.6 | 0.28 | 85% | 90% | 0.63 | 26.8% | 89.0% | 18.7 | 189.7 |
| Example 9 | 1-4 | 0.175 | 97% | 11.6 | 0.26 | 85% | 90.5% | 0.67 | 26.9% | 89.0% | 19.0 | 189.8 |
| Example 10 | 1-4 | 0.175 | 97% | 11.6 | 0.25 | 85% | 92% | 0.7 | 27.1% | 89.1% | 21.8 | 189.9 |
| Comparative Example 1 | 1-4 | 0.175 | 97% | 11.6 | No | No | No | / | 26.9% | 88.6% | 32.2 | 180.2 |
| Comparative Example 2 | No | No | No | No | 0.30 | 85% | 88.1% | / | 26.2% | 81.8% | 16.7 | 166.8 |
| Comparative Example 3 | 1-4 | 0.175 | 97% | 11.6 | 0.10 | 85% | 97.5% | 1.75 | 32.5% | 82.9% | 31.6 | 190.2 |
| Comparative Example 4 | 1'-1 | 0.175 | 97% | 0.92 | 0.30 | 85% | 88.1% | 0.58 | 33.1% | 82.3% | 20.3 | 179.7 |

From the results shown in Table 5, it could be seen that in Examples 1 to 10, by configuring the negative electrode active material in the negative electrode film layer to include both the first carbon-based material having S₂ greater than S₁ and the second carbon-based material having a degree of graphitization less than that of the first carbon-based material, the expansion of the electrode plate could be effectively suppressed, the secondary batteries exhibited excellent cycle performance and kinetic performance as well as superior energy density.

In Comparative Example 1, only the first carbon-based material was included. Although the cycle performance was good, the charging time was excessively long, and the kinetic performance was poor. In Comparative Example 2, only the second carbon-based material was included, and the degree of graphitization was low, resulting in a low energy density; the amorphous carbon component content was high, and although the expansion rate was low, the high activity of the amorphous carbon easily led to side reactions with the electrolytic solution, resulting in poor cycle performance. In Comparative Example 3, although the first carbon-based material and the second carbon-based material were included, the degree of graphitization of the second carbon-based material was higher than that of the first carbon-based material, such that the expansion rate of the electrode plate was high and the cycle performance was poor, and the degree of graphitization was high and the interlayer spacing was small, resulting in long charging time and poor kinetic performance. In Comparative Example 4, when S₂/S₁ of the first carbon-based material was equal to 0.92, the cycle performance was poor.

### Examples 11 to 16

Batteries were prepared in the same manner as in Example 4, except that S₂/S₁ values of the first carbon-based material were set to the values shown in Table 6. Specific results are shown in Table 5.

**Table 6**

| Serial number | First carbon-based material | | Battery performance | | |
|---|---|---|---|---|---|
| | Material | S₂/S₁ | Expansion rate of electrode plate after 1200 cycles | Capacity retention rate after 1000 cycles at 45 °C | Charging time T (min) |
| Example 11 | 1-5 | 1.8 | 26.0% | 89.1% | 18.0 |
| Example 12 | 1-6 | 2.3 | 25.8% | 89.5% | 17.6 |
| Example 13 | 1-7 | 148.7 | 25.5% | 89.8% | 17.8 |
| Example 14 | 1-8 | 199.8 | 26.2% | 89.0% | 18.3 |
| Example 15 | 1-9 | 250.6 | 27.1% | 86.3% | 19.3 |

From the results shown in Table 6, it could be seen that by setting 1.8 ≤ S₂/S₁ ≤ 199.8, the cycle performance and kinetic performance of the secondary batteries were further improved; further, by setting 2.3 ≤ S₂/S₁ ≤ 148.7, the cycle performance and kinetic performance of the secondary batteries were more excellent.

### Examples 16 to 21

Secondary batteries were prepared in the same manner as in Example 4, except that I_{D}/I_{G} values of the first carbon-based material and the second carbon-based material were set to the values shown in Table 7. The specific parameters and test results are shown in Table 7.

**Table 7**

| Serial number | First carbon-based material | | Second carbon-based material | A/B | Battery performance | | |
|---|---|---|---|---|---|---|---|
| | Type | I_{D}/I_{G} (A) | I_{D}/I_{G} (B) | | Expansion rate of electrode plate after 1200 cycles | Capacity retention rate after 1000 cycles at 45 °C | Charging time T (min) |
| Example 16 | 1-1 | 0.175 | 0.3978 | 0.44 | 25.9% | 89.8% | 16.7 |
| Example 17 | 1-10 | 0.155 | 0.3440 | 0.45 | 25.0% | 90.6% | 16.4 |
| Example 18 | 1-11 | 0.220 | 0.3385 | 0.65 | 25.2% | 90.6% | 16.3 |
| Example 19 | 1-12 | 0.280 | 0.3294 | 0.85 | 25.3% | 90.4% | 16.2 |
| Example 20 | 1-12 | 0.280 | 0.3182 | 0.88 | 25.7% | 89.9% | 17.6 |
| Example 21 | 1-12 | 0.280 | 0.2545 | 1.1 | 25.8% | 89.9% | 17.9 |

From the results shown in Table 7, it could be seen that compared with Example 21, the cycle performance and the kinetic performance of the secondary batteries in Examples 16 to 20 were further improved by setting the I_{D}/I_{G} of the second carbon-based material to be greater than the I_{D}/I_{G} of the first carbon-based material. The cycle performance and the kinetic performance of the secondary batteries in Examples 17 to 19 were further improved by setting A/B within the range of 0.45 to 0.85.

It should be noted that the present disclosure is not limited to the embodiments described above. The embodiments described above are merely examples, and any embodiments having a structure substantially identical to the technical concept and exerting the same functional effects within the scope of the technical solutions of the present disclosure are all included within the technical scope of the present disclosure. Furthermore, without departing from the spirit of the present disclosure, various modifications that can be conceived by those skilled in the art to the embodiments, as well as other embodiments formed by combining some of the constituent elements of the embodiments, are also included within the scope of the present disclosure.

## Claims

1. A secondary battery, comprising a negative electrode plate, wherein the negative electrode plate comprises a negative electrode current collector and a negative electrode film layer located on at least one surface of the negative electrode current collector and comprising a negative electrode active material,
the negative electrode active material comprises a first carbon-based material and a second carbon-based material,
the first carbon-based material comprises an external region and an internal region located at an inner side of the external region, wherein the external region refers to a region formed by extending from a surface of a particle of the first carbon-based material to an interior of the particle by a distance of 2.5 µm; and in a cross-sectional view of the first carbon-based material, a total pore area of the external region is denoted as S₁, a total pore area of the internal region is denoted as S₂, and S₂ > S₁, and a degree of graphitization of the first carbon-based material is greater than a degree of graphitization of the second carbon-based material.

2. The secondary battery according to claim 1, wherein
the degree of graphitization of the first carbon-based material is greater than or equal to 95.5%, optionally 95.5% to 98.0%; and/or the degree of graphitization of the second carbon-based material is 85% to 90.5%, optionally 85.5% to 90%.

3. The secondary battery according to claim 1 or 2, wherein
a specific capacity of the second carbon-based material is less than a specific capacity of the first carbon-based material.

4. The secondary battery according to any one of claims 1 to 3, wherein
an interlayer spacing of a 002 crystal plane of the second carbon-based material is greater than an interlayer spacing of a 002 crystal plane of the first carbon-based material.

5. The secondary battery according to any one of claims 1 to 4, wherein I_{D}/I_{G} of the second carbon-based material is greater than I_{D}/I_{G} of the first carbon-based material, I_{D} denotes a D peak intensity at 1350 ± 50 cm⁻¹ in a Raman spectrum of the carbon-based material, and I_{G} denotes a G peak intensity at 1580 ± 50 cm⁻¹ in the Raman spectrum of the carbon-based material;
optionally, the I_{D}/I_{G} of the first carbon-based material is denoted as A, the I_{D}/I_{G} of the second carbon-based material is denoted as B, and A/B ranges from 0.45 to 0.85.

6. The secondary battery according to any one of claims 1 to 5, wherein
the first carbon-based material and/or the second carbon-based material comprises primary particles;
optionally, a number proportion of the primary particles in the first carbon-based material is greater than or equal to 80%;
optionally, a number proportion of the primary particles in the second carbon-based material is greater than or equal to 80%.

7. The secondary battery according to any one of claims 1 to 6, wherein 1.8 ≤ S₂/S₁ ≤ 199.8, and optionally, 2.3 ≤ S₂/S₁ ≤ 148.7.

8. The secondary battery according to claim 7, wherein
an area of a pore structure in the external region of the first carbon-based material is less than or equal to 0.15 µm², optionally less than or equal to 0.13 µm²; and/or
the internal region of the first carbon-based material comprises one or more pore structures having an area greater than or equal to 0.15 µm², and optionally comprises one or more pore structures having an area of 0.15 µm² to 2.0 µm².

9. The secondary battery according to any one of claims 1 to 8, wherein
at least part of a surface of the first carbon-based material is provided with a coating layer; optionally, the coating layer comprises a carbon coating layer.

10. The secondary battery according to any one of claims 1 to 9, wherein the first carbon-based material satisfies at least one of the following conditions:
(1) the specific capacity of the first carbon-based material being greater than or equal to 355 mAh/g, optionally 355 mAh/g to 370 mAh/g;
(2) a true density of the first carbon-based material being 2.22 g/cm³ to 2.27 g/cm³, optionally 2.23 g/cm³ to 2.26 g/cm³;
(3) a powder compaction density of the first carbon-based material under a pressure of 20000 N being 1.65 g/cm³ to 2.0 g/cm³, optionally 1.68 g/cm³ to 1.98 g/cm³;
(4) a volume distribution particle size Dv50 of the first carbon-based material being 8.0 µm to 25.0 µm, optionally 10.0 µm to 22.0 µm;
(5) a volume distribution particle size Dv90 of the first carbon-based material being 16.0 µm to 45.0 µm, optionally 16.5 µm to 42.0 µm;
(6) a particle size distribution (Dv90-Dv10)/Dv50 of the first carbon-based material being less than or equal to 1.55, optionally 0.90 to 1.50;
(7) a tap density of the first carbon-based material being 0.85 g/cm³ to 1.30 g/cm³, optionally 0.90 g/cm³ to 1.25 g/cm³;
(8) an adsorption amount of linseed oil by 100 g of the first carbon-based material being 30 mL to 47 mL; and
(9) the I_{D}/I_{G} of the first carbon-based material being less than or equal to 0.280, optionally 0.155 to 0.220.

11. The secondary battery according to any one of claims 1 to 10, wherein the second carbon-based material satisfies at least one of the following conditions:
(1) the specific capacity of the second carbon-based material being 280 mAh/g to 340 mAh/g, optionally 300 mAh/g to 338 mAh/g;
(2) the interlayer spacing of the 002 crystal plane of the second carbon-based material being 0.33622 nm to 0.33669 nm, optionally 0.33626 nm to 0.33665 nm;
(3) a volume distribution particle size Dv50 of the second carbon-based material being 10 µm to 18 µm, optionally 12 µm to17 µm;
(4) a tap density of the second carbon-based material being 0.95 g/cm³ to 1.35 g/cm³, optionally 1.00 g/cm³ to 1.30 g/cm³;
(5) a volume distribution particle size Dv90 of the second carbon-based material being 25.0 µm to 45.0 µm, optionally 26.5 µm to 42.0 µm;
(6) a particle size distribution (Dv90-Dv10)/Dv50 of the second carbon-based material being less than or equal to 1.90, optionally 0.90 to 1.85;
(7) an adsorption amount of linseed oil by 100 g of the second carbon-based material being 38 mL to 50 mL;
(8) the second carbon-based material being artificial graphite; and
(9) the I_{D}/I_{G} of the second carbon-based material being 0.20 to 0.40, optionally 0.25 to 0.35.

12. The secondary battery according to any one of claims 1 to 11, wherein
in the negative electrode active material, a content of the first carbon-based material is greater than or equal to 30 wt%, optionally 50 wt% to 80 wt%.

13. The secondary battery according to any one of claims 1 to 12, wherein the negative electrode active material further comprises a silicon-based material; optionally, in the negative electrode active material, a content of the silicon-based material is 0.5 wt% to 30 wt%.

14. The secondary battery according to any one of claims 1 to 13, wherein
the negative electrode film layer satisfies at least one of the following (1) to (3):
(1) a compaction density of the negative electrode film layer being 1.45 g/cm³ to 1.90 g/cm³, optionally 1.50 g/cm³ to 1.85 g/cm³;
(2) an areal density of the negative electrode film layer being 5.0 mg/cm² to 25.0 mg/cm², optionally 5.5 mg/cm² to 22.5 mg/cm²; and
(3) a thickness of the negative electrode film layer being 40 µm to 120 µm, optionally 45 µm to 100 µm.

15. An electric device, comprising the secondary battery according to any one of claims 1 to 14.
